(19) **Europäisches Patentamt**
**European Patent Office**
**Office européen des brevets**

(11) **EP 2 067 017 B1**

(12) **FASCICULE DE BREVET EUROPEEN**

(45) Date de publication et mention de la délivrance du brevet:
**28.02.2018 Bulletin 2018/09**

(21) Numéro de dépôt: **07848238.7**

(22) Date de dépôt: **14.09.2007**

(51) Int Cl.:
*G01N 15/02* *(2006.01)*      *G01N 27/447* *(2006.01)*

(86) Numéro de dépôt international:
**PCT/FR2007/001499**

(87) Numéro de publication internationale:
**WO 2008/031958 (20.03.2008 Gazette 2008/12)**

(54) **DÉTERMINATION DES RAYONS HYDRODYNAMIQUES DES CONSTITUANTS D'UN MÉLANGE PAR ANALYSE DE LA DISPERSION DE TAYLOR EFFECTUÉE SUITE À UNE SÉPARATION PAR ÉLECTROPHORÈSE CAPILLAIRE**

BESTIMMUNG DER HYDRODYNAMISCHEN RADIEN DER KOMPONENTEN EINER MISCHUNG DURCH ANALYSE EINER DURCH EINE KAPILLARELEKTROPHORESE-TRENNUNG HERVORGERUFENEN TAYLOR-DISPERSION

DETERMINATION OF THE HYDRODYNAMIC RADIUS OF THE CONSTITUENTS OF A MIXTURE BY ANALYSING A TAYLOR DISPERSION PRODUCED AFTER A CAPILLARY ELECTROPHORESIS SEPARATION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.09.2006 FR 0608112**

(43) Date de publication de la demande:
**10.06.2009 Bulletin 2009/24**

(73) Titulaire: **CENTRE NATIONAL DE LA RECHERCHE SCIENTIFIQUE -CNRS- 75016 Paris (FR)**

(72) Inventeurs:
• **COTTET, Hervé**
  **34920 LE CRES (FR)**
• **LE SAUX, Thomas**
  **75020 Paris (FR)**

(74) Mandataire: **Lavoix**
  **2, place d'Estienne d'Orves**
  **75441 Paris Cedex 09 (FR)**

(56) Documents cités:
**WO-A-98/52013          WO-A-03/076052**
**US-A1- 2002 168 643     US-A1- 2003 102 214**
**US-A1- 2003 230 486**

**EP 2 067 017 B1**

**Description**

La présente invention a trait à une méthode de séparation analytique permettant d'accéder très facilement et très rapidement aux dimensions des différents constituants d'un mélange. Plus précisément, la présente invention concerne un procédé qui permet, à partir d'un mélange, d'accéder très simplement aux rayons hydrodynamiques individuels des espèces de type molécules, macromolécules, colloïdes, particules, ou microorganismes présents en solution ou en suspension au sein du mélange.

Il existe industriellement un intérêt important pour des méthodes de caractérisation précise des dimensions d'objets moléculaires, macromoléculaires, colloïdaux ou particulaires. En effet, les dimensions d'actifs ou d'additifs présents en solution ou en suspension dans une composition est un paramètre de première importance dans de nombreuses applications, parmi lesquelles on peut citer, de façon non limitative, des domaines aussi variés que les polymères de spécialités de l'industrie chimique ou cosmétique, les polypeptides synthétiques biocompatibles notamment pour la délivrance de principes actifs, les latex pour peintures, les vernis ou les compositions pour le couchage du papier.

De façon plus générale, des techniques de caractérisation précise de la dimension d'objets en solution ou en suspension sont également très importantes dans d'autres domaines, par exemple en analyse biologique, notamment pour la caractérisation de mélange de protéines ou de milieux contenant des microorganismes. Le document WO 03/076052 A (CALIPER TECHN CORP, 18 septembre 2003) décrit par exemple une méthode de séparation de particules pour un échantillon, ladite méthode combinant une étape au cours de laquelle un gradient de pression est appliqué au canal contenant l'échantillon, et une étape au cours de laquelle une différence de potentiel est appliquée. Ce document propose l'utilisation d'un marqueur détectable au niveau d'un dispositif de détection. Or, une caractérisation fine de la taille de tels objets s'avère en général difficile à obtenir, et ce d'autant que, la plupart du temps, les objets dont on cherche à établir les dimensions son présents au sein de mélanges, généralement complexes.

Ainsi, en particulier, la technique de détermination du rayon hydrodynamique largement utilisée à l'heure actuelle dans l'industrie, qui consiste à utiliser la diffusion quasi-élastique de lumière (DLS) s'avère une méthode délicate et difficile à mettre en oeuvre, et souvent inappropriée, dans le cas de la caractérisation de mélanges. En effet, la technique de diffusion quasi-élastique de lumière permet uniquement d'accéder à une valeur *moyenne* du rayon hydrodynamique des espèces du mélange, sans indication quant aux propriétés individuelles de chacune des espèces présentes. Au contraire, dans le cas de la présence d'objets de tailles sensiblement différentes dans le mélange analysé (ce qui est très courant dans la plupart des applications industrielles), la technique de diffusion quasi-élastique de la lumière tend à surestimer la contribution des objets de plus grande taille, avec des erreurs commises sur la dimension des objets de plus petite taille qui peuvent être très élevée (jusqu'à plus de 100%), car l'intensité diffusée varie comme le rayon de l'objet à la puissance 6. Pour plus de détails concernant la technique de diffusion quasi-élastique de la lumière et ses limites dans le cas de mélanges, on pourra notamment se reporter à l'ouvrage Dynamic light scattering de B. J. Berne et R. Peroca,; Wiley-Interscience, New York, USA, 1976. Le document WO 98/52013 A (PRECISION DETECTORS INC, 19 novembre 1998) présente également un système de mesure du rayon hydrodynamique de molécules dans un échantillon liquide, basé sur la diffusion d'un faisceau laser par lesdites molécules. D'autres méthodes connues de détermination du rayon hydrodynamique se révèlent également inadaptées dans le cas de mélanges. On peut notamment citer dans ce cadre :

- la diffusion libre (telle que décrite notamment par W. Jorgenson and K.D. Lukacs, dans Anal. Chem., 1981, 53, 1298), qui présente en outre l'inconvénient d'être une technique relativement longue,
- les technique de sédimentation, comme celle décrite par K. E. Van Holde, R. L. Baldwin, dans J. Phys. Chem., 1958, 62, 734,
- les techniques de RMN pulsées, du type de celles enseignées par E. O. Stejskal, J. E. Tanner, dans J. Chem. Phys., 1965, 42, 288
- les méthodes chromatographiques telles que la chromatographie hydrodynamique (HDC) décrite par J. Bos et R. Tijssen, dans l'ouvrage Chromatography in the Petroleum Industry; J Chrom Library, Vol. 56; E. R. Adlard, Ed.; Elsevier, Amsterdam, 1995.

Pour permettre la caractérisation fine des dimensions des espèces présentes dans des mélanges, d'autres méthodes plus spécifiques s'avèrent nécessaires.

A cet effet, il a notamment été proposé d'utiliser la chromatographie d'exclusion stérique (SEC) séparative couplée à une triple mesure de (i) l'indice de réfraction, (ii) la viscosité et (iii) la diffusion de la lumière sur chacune des fractions séparées, qui permet d'accéder à la dimension et à la distribution de la masse molaire de constituants présents dans des mélanges. Cette technique est certes plus précise que la diffusion quasi-élastique de la lumière, en particulier car elle permet une séparation des différentes espèces du mélange préalablement à leur caractérisation, mais elle présente néanmoins un certain nombre d'inconvénients, parmi lesquels on peut citer les suivants :

- tout d'abord, elle est lourde à mettre en oeuvre, avec un appareillage onéreux et délicat à manipuler.

- de plus, elle nécessite en général un temps d'analyse long, voire très long, en particulier car elle inclut la détermination du rapport dn/dC (variation de l'indice de réfraction en fonction de la concentration), nécessaire pour accéder à la concentration en soluté à partir des mesures d'indice de réfraction par réfractométrie différentielle.

- en outre, un certain nombre d'espèces ne peuvent être caractérisées par cette technique. En particulier, les espèces chargées électriquement sont en général très difficiles à caractériser en chromatographie d'exclusion stérique, tout particulièrement les macromolécules chargées électriquement, notamment dans la mesure où elles ont tendance à s'adsorber sur les phases stationnaires mises en oeuvre. Par ailleurs, les efforts de cisaillement qui se produisent dans la colonne de chromatographie limitent généralement l'utilisation de la chromatographie d'exclusion stérique à des espèces de faibles dimensions, typiquement de masse moléculaire inférieure à 1 000 000 g/mol dans le cas de polymères. De façon plus générale, seuls les composés inertes vis-à-vis de la phase stationnaire peuvent être caractérisés en chromatographie d'exclusion stérique, ce qui interdit par exemple l'analyse de composés de type protéines, polymères ioniques (polyélectrolytes notamment), latex, colloïdes, ou microorganisme.

La présente invention vise à fournir un procédé permettant de déterminer le rayon hydrodynamique des constituants d'un mélange comme on pourrait le faire en employant la technique précitée de chromatographie par exclusion stérique séparative couplée à une mesure de l'indice de réfraction, de la viscosité et de la diffusion de la lumière, mais en évitant les inconvénients et les limitations inhérents à cette méthode. Plus généralement, un but de l'invention est de fournir une méthode permettant de déterminer simplement et à faible coût le rayon hydrodynamique des constituants d'un mélange à base de constituants chargés électriquement.

A cet effet, l'invention a pour objet un procédé de séparation et de détermination du rayon hydrodynamique des constituants d'un mélange M, qui comprend les étapes suivantes :

(A) en utilisant la technique de l'électrophorèse capillaire, on sépare les constituants du mélange M, en les laissant au sein du capillaire ;

(B) à l'une des extrémités du capillaire ainsi obtenu, contenant dans différentes zones les constituants séparés dans l'étape (A), on injecte un marqueur détectable au niveau d'un dispositif de détection placé du côté de l'autre extrémité du capillaire ;

(C) on induit une différence de pression hydrostatique positive entre l'extrémité du capillaire par laquelle on a introduit le marqueur de l'étape (B) et l'autre extrémité du capillaire, ce par quoi on provoque un déplacement des différentes espèces présentes dans le capillaire, associé à un phénomène de dispersion de Taylor, et on laisse migrer devant le détecteur en sortie du capillaire devant le détecteur en sortie du capillaire les différents constituants séparées lors de l'étape (A), et enfin le marqueur introduit lors de l'étape (B) ; et

(D) par analyse de la dispersion de Taylor obtenue, on détermine le rayon hydrodynamique de chacun desdits constituants, à partir du temps de détection du marqueur et du profil d'élution de chacun des constituants.

Au sens de la présente description, l'expression *"temps de détection"* d'une espèce donnée a son acception usuelle, et désigne le temps qui s'écoule entre le début de l'application de la différence de pression de l'étape (C) et la détection de l'espèce considérée au niveau du détecteur.

Par ailleurs, par *"profil d'élution"*, on entend ici les caractéristiques de chacun des pics chromatographiques détectés au niveau du détecteur à l'issu de l'étape (C), ce profil incluant en particulier le temps de détection (correspondant au sommet du pic), ainsi que la variance ou la largeur à mi-hauteur de chacun des pics correspondants.

Le procédé de l'invention met en oeuvre une séparation par électrophorèse capillaire, qui est suivie par une détermination du rayon hydrodynamique des composés séparés en utilisant le phénomène de dispersion de Taylor.

Dans ce cadre, il est à souligner que les inventeurs ont dû spécifiquement mettre au point une adaptation originale d'une technique connue, mais très peu usitée, consistant à déterminer le rayon hydrodynamique d'un composé par analyse de la dispersion de Taylor, en permettant le couplage de cette technique à une étape préliminaire de séparation par électrophorèse capillaire.

A ce sujet, il convient en particulier de rappeler les éléments ci-après concernant la technique généralement préconisée lorsqu'on détermine le rayon hydrodynamique d'une espèce par analyse de la dispersion de Taylor.

La détermination du rayon hydrodynamique d'une espèce par analyse de sa dispersion de Taylor passe par une dispersion d'une solution ou d'une suspension de l'espèce à analyser dans un tube creux de faible diamètre interne.

Cette dispersion est le plus souvent réalisée en injectant une bande de la solution ou de la dispersion de l'espèce à analyser dans le tube, puis en induisant un flux hydrodynamique dans le tube, typiquement en appliquant une pression à l'entrée du tube.

Le flux hydrodynamique induit un profil de vitesse dispersif au sein du tube, généralement parabolique (de type profil de Poiseuille), les espèces les plus proches de la paroi du tube ayant une vitesse de déplacement quasi-nulle, cette vitesse augmentant plus les espèces se rapprochent de l'axe, avec une vitesse maximale pour les composés situés au centre du tube.

Les espèces sont alors redistribuées dans le tube en fonction de leur coefficient de diffusion :

- les molécules ayant un coefficient de diffusion élevé ont une vitesse de déplacement moyenne quasiment identique quelle que soit leur position initiale dans le capillaire. Le pic correspondant à ces molécules est peu élargi par le profil de vitesse.
- à l'inverse les molécules ayant un faible coefficient de diffusion voient leur pic très élargi par le profil dispersif des vitesses.

L'élargissement de la bande de soluté dépend directement du coefficient de diffusion moléculaire D de la molécule.

L'analyse de l'élargissement de la bande d'une espèce considérée sous l'influence d'un flux hydrodynamique dans un tube ouvert est appelée analyse de la dispersion de Taylor (ou TDA, pour l'anglais "*Taylor Dispersion Analysis* ").

En règle générale, cette analyse permet directement d'accéder au coefficient de diffusion moléculaire D, en utilisant la relation ci-dessous :

$$H = ( 2\,D\,/u ) + ( d_c^2\,u\, /\, 96\,D ) \qquad \text{(Relation de Taylor)}$$

où :

- H est la hauteur de plateau théorique H du pic de l'espèce (directement relié à la largeur du pic chromatographique), calculée comme suit :

$$H = ( l_s\,\sigma_t^2 )/( t_d^2 ) \quad ,$$

où :

$l_s$ est la longueur parcourue par le soluté dans le tube,
$t_d$ est le temps moyen de détection du pic ; et
$\sigma_t^2$ est la variance temporelle du pic $(\sigma_t^2 = <(t\text{-}td)^2> )$

cette relation s'écrivant, dans le cas particulier d'un pic gaussien :

$$H = ( l_s\,\delta^2 )/( 5,54\,t_d^2 )$$

- u est la vitesse linéaire de déplacement de l'espèce soumise au flux hydrodynamique ;

- $d_c$ est le diamètre interne du tube employé ;

Une fois obtenue la valeur de D, on peut aisément déterminer le rayon hydrodynamique $R_h$ de l'espèce considérée, dans la mesure où $R_h$ et D sont reliés par la relation suivante :

$$D = ( k\,T ) / ( 6\,\pi\,\eta\,R_h ) \qquad \text{(relation de Einstein):}$$

où :

k est la constante de Boltzmann ; et

$\eta$ est la viscosité du milieu où est dispersé l'espèce.

Ainsi qu'il ressort des relations précitées, outre les caractéristiques du tube et du milieu dispersant utilisé, la détermination du rayon hydrodynamique d'une espèce par analyse de la dispersion de Taylor passe la connaissance :

- de la vitesse de déplacement (u) de l'espèce considérée ;
- de la distance parcourue par l'espèce dans le tube ($l_s$).

Selon la méthode usuellement mise en oeuvre pour l'analyse de la dispersion de Taylor, on accède très facilement à ces deux paramètres. En effet, le plus souvent, cette technique est utilisée pour déterminer le rayon hydrodynamique d'une espèce donnée, qui est généralement introduite à l'entrée d'un tube au temps t=0, et qui est détectée au niveau d'un détecteur situé en aval à $t=t_d$ (temps de détection) Dans ces conditions très spécifiques, la distance parcourue par l'espèce dans le tube est très facile à établir : elle est en fait égale à la longueur (L) qui va de l'entrée du tube au détecteur. A partir de cette distance (L), fixée et mesurable précisément et du temps de détection lui aussi mesurable précisément, on établit très facilement la vitesse de déplacement (u), par le rapport ($L / t_d$).

Dans le cadre de la présente invention, cette technique simple ne peut plus être appliquée. En effet, au moment où débute la dispersion de Taylor (début de l'étape (C)), les espèces dont on cherche à déterminer le rayon hydrodynamique ne sont pas localisées à l'entrée du capillaire, mais, au contraire, au sein du capillaire, dans des zones dont l'emplacement initial n'est pas déterminable *a priori*. Dans ces conditions, on ne peut pas, sans adaptation, accéder par la méthode usuelle à la longueur parcourue pour chacune des espèces, ni à leur vitesse de déplacement.

Pour permettre la mise en oeuvre de la technique d'analyse de dispersion de Taylor, les inventeurs ont du mettre au point une adaptation spécifique de cette technique. Cette adaptation consiste à introduire un marqueur à l'entrée du capillaire préalablement à la dispersion de Taylor (étape (B) du procédé). La méthode proposée, bien que très simple de mise en oeuvre, s'avère particulièrement précise.

En effet, compte tenu de la présence spécifique du marqueur introduit dans l'étape (B), on peut très aisément accéder au rayon hydrodynamique des différentes espèces dans l'étape (D).

Plus précisément, du fait que le marqueur est introduit à l'entrée du capillaire au début de la dispersion de Taylor, la distance ($l_s^m$) parcourue par ce marqueur au cours de l'étape (C) est connue : elle est égale à la distance (L) existant entre l'entrée du capillaire et le détecteur. Le temps de détection de ce marqueur ($t_d^m$) étant également connue, on en déduit la vitesse de déplacement du marqueur, qui est égale au rapport ($L / t_d^m$).

De là, on accède sans difficulté aux vitesses de déplacement et aux distances parcourues par les différents constituants qui ont été séparés à l'issue de l'étape (A) :

- pour ce qui est de leur vitesse de déplacement, elle est la même que celle du marqueur, étant donné que l'ensembles des espèces présentes dans le capillaire se déplacent à la même vitesse dans l'étape (C). En d'autres termes, la vitesse de déplacement u de chacun des constituants séparés est calculée comme suit :

$$u = (L / t_d^m)$$

où :

L représente la distance entre l'entrée du capillaire et le détecteur ; et
$t_d^m$ désigne le temps de détection du marqueur.

- La distance ($l_s^C$) parcouru par chacun des constituants est quant à elle calculée à partir du temps de détection ($t_d^C$) du constituant considéré, par la formule :

$$l_s^C = L . ( t_d^C / t_d^m ),$$

où :

L représente la distance entre l'entrée du capillaire et le détecteur ; et
$t_d^C$ désigne le temps de détection du constituant considéré $t_d^m$ désigne le temps de détection du marqueur

A partir de ces données, on accède sans mal au coefficient de diffusion D et donc au rayon hydrodynamique, en utilisant les relations de Taylor et de Einstein précitées.

Dans ce cadre, une méthode utilisable dans tous les cas de figure pour accéder au coefficient de diffusion D est de répéter plusieurs fois les étapes (A), (B) et (C) sur différents échantillons du mélange M, en variant dans chaque cas uniquement la différence de pression imposée dans l'étape (B), tous les autres paramètres restant inchangés, et de déterminer dans chaque cas la variance H du pic de chaque constituant tel que détecté à l'étape (C). On obtient ainsi, pour chaque constituant, différentes valeurs de H pour différentes différences de pressions, c'est-à-dire pour différentes vitesses u de déplacement des espèces dans le capillaire. Or, en pratique, il existe en effet une relation quasi linéaire entre H et u , le terme (2 D /u) étant en général négligeable devant le terme ($d_c^2$u / 96 D) dans l'équation de Taylor. De ce fait, à partir des différentes valeurs de H et u obtenus dans chaque cas, on peut donc tracer une droite représentant l'évolution de H en fonction de u, dont la pente permet d'accéder directement à la valeur de D.

On peut mettre en oeuvre une méthode plus rapide encore dans le cas plus spécifique (mais néanmoins relativement fréquent) où la contribution de l'étape d'électrophorèse à la variance du pic est négligeable. C'est le cas par exemple pour des analytes monodisperses et/ou lorsque la dispersion de Taylor est importante (cette dispersion étant d'autant plus élevée que le diamètre interne du capillaire est élevé et que la valeur du coefficient de dispersion D est faible). Dans ce cas de figure très spécifique, il est possible d'obtenir le coefficient de diffusion moléculaire à partir d'une seule série d'étapes (A) à (C), par la simple mesure de la variance $\sigma_t^2$ du pic chromatographique du composé considéré (ou de la largeur à mi-hauteur $w_{1/2}$, dans le cas d'un pic gaussien) à partir de la relation suivante :

$$D = (\, d_c^2\, u\, /\, 96\, H) = (\, d_c^2\, t_d^2\, u\, /\, 96\, l_s\, \sigma_t^2\, )$$

qui s'écrit, dans le cas d'un pic gaussien :

$$D = (\, d_c^2\, u\, /\, 96\, H) = (5{,}54\, d_c^2\, t_d^2\, u\, /\, 96\, l_s\, w_{1/2}^2\, )$$

Le procédé mis au point par les inventeurs présente de multiples avantages.

En particulier, comme on vient de le mettre en évidence, il permet le plus souvent, en quelques minutes seulement, de déterminer très aisément le coefficient de diffusion D (et donc le rayon hydrodynamique $R_h$) d'une espèce initialement présente dans un mélange.

Il est en outre à noter à ce sujet que le procédé de l'invention met spécifiquement en oeuvre la méthode d'analyse de la diffusion de Taylor, qui est une méthode absolue, qui ne nécessite donc aucun d'étalonnage.

Par ailleurs, le procédé de l'invention met en oeuvre une étape de séparation et une étape d'analyse conduite dans un seul et même capillaire, ce qui en fait un procédé extrêmement pratique Le procédé de l'invention peut en particulier être mis en oeuvre dans quasiment tous les dispositifs d'électrophorèse capillaire actuels sans modification technique substantielle de ces dispositifs, ce qui permet d'envisager une mise en oeuvre quasiment sans surcoût (ou avec un coût minime) dans la plupart des appareillages commerciaux d'électrophorèse existants.

Par exemple, le procédé de l'invention peut avantageusement être mis en oeuvre dans un appareil d'électrophorèse capillaire de type 3DCE commercialisé par Agilent Technologie , ou bien un appareil de type PACE MDQ vendu par Beckman Coulter.

Différentes variantes et mode de réalisation préférentiels du procédé vont maintenant être décrits plus en détails.

### Les constituants du mélange M

Le procédé de l'invention permet de caractériser de façon fine les dimensions de très nombreux constituants présents dans un mélange, à partir du moment où ces constituants peuvent être séparés par électrophorèse capillaire et détectés en ligne (avantageusement par absorbance UV, ou bien, alternativement par fluorescence, ou conductimétrie, notamment), ce qui est la cas de bon nombre de constituants. Le mélange M dont on sépare les constituants selon le procédé de l'invention peut ainsi être, en pratique, tout mélange adapté à une séparation par électrophorèse capillaire. Pour plus de précisions concernant les mélanges séparables par électrophorèse capillaire, on pourra notamment se reporter à M. G. Khaledi dans High Performance Capillary Electrophoresis, Chemical Analysis Series, vol. 146, (1998), ou encore à l'ouvrage de S. F. Y. Li "Capillary electrophoresis : principles, practice and applications", Journal of Chromatography Library, vol. 52, troisième impression (1996).

Le plus souvent, les "constituants" du mélange M qui sont séparés et caractérisés selon l'invention sont des molécules, des macromolécules, des associations de molécules ou de macromolécules (polymères, peptides, protéines ...), des particules (minérales ou organiques, notamment des nanoparticules), des colloïdes, des globules insolubles dans un milieu dispersant (de type émulsion, microémulsion ou latex par exemple), des agrégats de particules, des agrégats de polymères, et/ou des microorganismes (virus, bactéries, cellules...). Ces constituants peuvent être présents dans le mélange M à l'état dispersé ou solubilisé dans un milieu solvant ou dispersant. A noter également que le mélange M peut contenir des constituants appartenant à un seul de ces types ou bien des mélanges de composés pris dans plusieurs des catégories précitées.

Quelle que soit leur nature exacte, les constituants séparés et caractérisés selon l'invention ont le plus souvent des rayons hydrodynamiques compris entre quelques dixièmes de nanomètres et quelques microns, le procédé de l'invention étant tout particulièrement adapté pour la séparation et la caractérisation de constituants ayant des rayons hydrodynamiques de l'ordre de 0,5 nm à 1 micron, par exemple entre 1 nm et 500 nm.

Les constituants du mélange M peuvent être des espèces chargées ou non chargées.

Ainsi, selon un mode de réalisation particulier, tout ou partie des constituants du mélange M sont des espèces chargées électriquement. Un des avantages du procédé de l'invention par rapport aux techniques de chromatographie d'exclusion stérique actuellement connues est la possibilité de séparer et caractériser de telles espèces électriquement chargées. Selon ce mode de réalisation, le mélange M peut par exemple être un mélange de plusieurs constituants chargés ayant des charges de même signe, mais des mélanges de constituants de charges de signes différents sont également envisageables. Le mélange pouvant éventuellement contenir des constituants non chargés électriquement.

Selon un mode de réalisation possible, le mélange M peut comprendre des constituants non chargés électriquement, en particulier des constituants non chargés électriquement séparables par électrophorèse capillaire en mode micellaire.

### Le capillaire employé

Dans le procédé de l'invention, on utilise un seul et même capillaire pour effectuer les étapes de séparation électrophorétique (étape (A)) et de diffusion de Taylor (étape (C))

En pratique, quasiment tout capillaire adapté à une électrophorèse convient au procédé de l'invention, ces capillaires se révélant en effet généralement également adaptés à la diffusion de Taylor.

Le capillaire employé dans les étapes (A) à (C) du procédé de l'invention est avantageusement un capillaire de diamètre interne compris entre 5 et 300 microns, la dispersion de Taylor qui s'opère au cours de l'étape (C) étant d'autant plus marqué que ce diamètre interne est élevé. Le diamètre interne du capillaire est avantageusement inférieur ou égal à 200 microns, de préférence inférieur ou égal à 100 microns, notamment pour éviter un étalement trop important des pics qui pourrait conduire à un recouvrement trop important des pics des différents constituants séparés dans l'étape (A). Il est toutefois préférable que ce diamètre interne reste supérieur ou égal à 10 microns, notamment pour permettre une sensibilité de mesure suffisante et également pour se trouver dans des conditions où la hauteur de plateau théorique (H) est une fonction affine de la vitesse linéaire de déplacement (u).

Ainsi, à titre de capillaire avantageusement utilisable pour mettre en oeuvre le procédé de séparation selon l'invention, on peut notamment citer les capillaires de diamètre interne entre 10 et 100 microns, tels que les capillaires usuels de diamètre interne égal à 10 microns, 25 microns, 50 microns, 75 microns ou 100 microns, les capillaires de 50 microns se révélant en particulier bien adaptés dans la plupart des cas.

Par ailleurs, un capillaire utilisé pour le procédé de l'invention doit, en général, avoir une longueur suffisante pour permettre la séparation par électrophorèse dans une première zone et la dispersion de Taylor dans le reste du capillaire (bien qu'il soit envisageable de réduire l'encombrement en effectuant l'électrophorèse dans un premier sens du capillaire et le dispersion de Taylor en employant le capillaire dans l'autre sens). En règle générale, le capillaire mis en oeuvre dans les étapes (A) à (C) du procédé de l'invention a de préférence une longueur d'au moins 20 cm, plus préférentiellement d'au moins 30 cm. Néanmoins, le plus souvent, pour limiter les temps d'analyse, on préfère que la longueur du capillaire reste inférieure à 1 m, avantageusement inférieure à 60 cm, cette longueur étant par exemple inférieure ou égale à 50 cm. Ainsi, typiquement, la longueur d'un capillaire utile selon l'invention peut avantageusement être comprise entre 20 cm et 1 m, par exemple entre 20 et 60 cm, de préférence entre 30 et 50 cm (typiquement de l'ordre de 40 cm). Toutefois, cette longueur peut varier en une assez large mesure.

Par ailleurs, le capillaire utilisé est spécifiquement muni d'un détecteur, permettant d'observer sous la forme de pics chromatographiques la sortie du marqueur introduit dans l'étape (B) et des différents constituants séparés dans l'étape (A). Le détecteur employé peut notamment être un détecteur d'absorption de rayonnements UV ou IR, un détecteur par fluorescence, ou un conductimètre (notamment du type des conductimètres généralement désignés par le terme anglais de *"contactless conductivity detector"*).

Généralement, le détecteur utilisé selon l'invention est placé du côté de la sortie du capillaire. La détection se fait en général à travers le capillaire dans une zone typiquement située dans les 10 derniers centimètres du capillaire. A noter à ce sujet que, lorsqu'il est fait référence dans la présente description à la "longueur entre l'entrée du capillaire et le détecteur", cette expression a son acception courante et désigne en fait de la longueur existant entre l'entrée du capillaire et cette zone de détection.

### L'étape (A)

L'étape (A) du procédé de l'invention est une étape de séparation par électrophorèse capillaire qui peut être mise en oeuvre selon tout moyen connu en soi, pour effectuer au mieux la séparation des constituants du mélange M, par exemple selon leur charge ou selon leur rapport charge/masse.

Il est des compétences d'un spécialiste en électrophorèse d'adapter les conditions à mettre en oeuvre pour obtenir une séparation la plus résolutive possible dans l'étape (A). Pour plus de détails concernant les conditions généra-rales de mise en oeuvre d'une électrophorèse conduite de façon à séparer un mélange de composés selon leur charge ou selon leur rapport charge/masse, on pourra notamment se reporter à l'article de M. G. Khaledi dans High Performance Capillary Electrophoresis, Chemical Analysis Series, vol. 146, (1998), ou à l'ouvrage précité de S. F. Y. Li "Capillary electrophoresis : principles, practice and applications", Journal of Chromatography Library, vol. 52, troisième impression (1996).

Il est également des compétences du spécialiste en électrophorèse d'adapter la durée de l'étape (A) pour que les espèces séparées restent au sein du capillaire à l'issue de l'étape (A). Dans ce cadre, notamment pour que l'étape (C) soit la plus efficace possible, on préfère que les constituants du mélanges ne migrent pas au-delà de la première moitié du capillaire dans l'étape (A) et avantageusement pas au-delà du premier tiers.

Le plus souvent, l'étape (A) est conduite selon un mode classique, à savoir en remplissant le capillaire par un électrolyte de séparation, puis en injectant le mélange M en tête de capillaire et en séparant les constituants du mélange par application d'une différence de potentiel entre l'entrée et la sortie du capillaire.

Selon un autre mode de réalisation plus spécifique, l'étape (A) peut être conduit en effectuant une électrophorèse capillaire bidimensionnelle au sein d'un unique capillaire, selon la technique décrite en particulier dans la demande FR 03 10299.

### L'étape (B)

Dans l'étape (B), on injecte en tête de colonne un marqueur qui permet de déterminer la vitesse de l'ensemble des constituants du mélange (M) dans l'étape (C), et, partant, la longueur parcourue par chaque constituant, ce qui permet d'accéder au rayon hydrodynamique dans l'étape (D).

Le choix de ce marqueur est donc tout particulièrement important. Dans ce cadre, il convient en particulier que ce marqueur soit très bien détecté par le dispositif de détectage présent à la sortie du capillaire. Il est également préférable (quoique non requis dans le cas le plus général) que ce marqueur permette l'obtention d'un pic le plus fin possible au niveau du dispositif de sortie, notamment de façon à optimiser la mesure du temps de détection du marqueur.

Le marqueur introduit dans l'étape (B) est en général une espèce moléculaire de relativement faible dimension, qui peut être indifféremment neutre ou chargée électriquement. Un grand nombre de composés sont potentiellement utilisables dans ce cadre. A titre indicatif de composés adaptés à titre de marqueur dans l'étape (C), on peut citer les composés suivants (parmi de nombreux autres exemples) :

- composés neutre adaptés : le formamide, le diméthylformamide, ou bien encore l'oxyde de mésityle ou l'acétone ;

- composés chargés électriquement adaptés : les marqueurs de type imidazoles (marqueurs cationiques), ou bien encore l'acide benzoïque ou les naphtalènesulfonates (marqueurs anioniques).

Selon un premier mode de réalisation de l'invention, qui correspond notamment à celui des exemples ci-annexés, le mélange M séparé dans l'étape (A) et le marqueur introduit dans le capillaire lors de l'étape (B) sont tous deux injectés par une même entrée du capillaire, un dispositif de détection étant placé du côté de l'autre extrémité du capillaire.

Selon un autre mode de réalisation particulier envisageable, le mélange M séparé dans l'étape (A) est, à l'inverse, injecté dans le capillaire par l'extrémité opposée à celle où le marqueur est introduit dans l'étape (B). Ce deuxième mode de mise en oeuvre présente l'intérêt de bénéficier de toute la longueur du capillaire à la fois pour effectuer la séparation électrophorétique de l'étape (A) et ensuite pour effectuer la dispersion de Taylor de l'étape (B). En effet, avec ce mode de mise en oeuvre, les espèces à séparer migrent dans un premier sens dans l'étape (A) et dans le sens inverse dans l'étape (B). Ce mode de réalisation spécifique de l'invention nécessite de ce fait généralement des capillaires de plus faible longueur que ceux mis en oeuvre dans le mode de réalisation où le mélange M et le marqueur sont injectés par une même entrée du capillaire.

### L'étape (C)

L'étape (C) du procédé de l'invention vise à élargir les pics de constituants séparés au sein du capillaire par diffusion de Taylor.

Cette diffusion de Taylor dont le mécanisme est bien connu notamment des articles de G. Taylor, dans Proc. Roy. Soc., A, , 219, 186-203 (1953) et de R. Aris, dans Proc. Roy. Soc. Lond. A, , 235, 67-77 (1956) peut être effectuée selon tout moyen connu en soi, par exemple selon la technique décrite dans Phys. Chem., 1974, 78, 2297-2301 ou dans Science, 1994, 266, 773-776.

Dans le cadre du procédé de l'invention, la dispersion de Taylor est induite en établissant dans l'étape (C) une différence de pression hydrostatique positive entre l'extrémité du capillaire par laquelle on a introduit le marqueur de l'étape (B) et l'autre extrémité du capillaire, le gradient de pression ainsi créé induisant un flux net de solvant vers la sortie, et donc une migration des différentes espèces (marqueur et constituants du mélange M initial) vers le détecteur.

Le plus souvent, la différence de pression entre les deux extrémités du capillaire appliquée au cours de l'étape (C) est de l'ordre de 5 à 50 mbars (de 500 à 5000 Pa).

Par ailleurs, il est en général préférable que la différence de pression appliquée au cours de l'étape (C) entre les extrémités du capillaire reste sensiblement constante tout au long de l'étape (C), notamment pour permettre une mesure la plus exacte possible du rayon hydrodynamique dans l'étape (D). Ainsi, avantageusement, au cours de cette étape (C), la dépression varie au plus à +/- 0,1 mbar (10 Pa) près autour d'une valeur de consigne fixée. La valeur de cette valeur de consigne n'a toutefois pas à être déterminée de façon exacte dans le cas le plus général.

Dans l'étape (C), la différence de pression entre les deux extrémités du capillaire peut être établie selon tout moyen connu en soi, par exemple en appliquant une surpression au niveau de l'extrémité du capillaire par laquelle on a introduit le marqueur de l'étape (B), ou bien, inversement, en appliquant une dépression à l'autre extrémité.

Selon un autre mode de réalisation intéressant, la différence de pression entre les deux extrémités du capillaire peut être induite en établissant une différence de niveaux entre les réservoirs de solvant à l'entrée et à la sortie du capillaire. Ce mode de réalisation se révèle généralement avantageux dans la mesure où il permet d'établir une différence de pression constante tout au long de l'étape (C), sans nécessiter de système additionnel de régulation de pression.

Par ailleurs, comme cela est connu en soi, il est requis dans l'étape (C) que le temps de détection des différents constituants soit bien supérieur au rapport $d_c^2/2D$ (où $d_c$ est le diamètre interne du capillaire). Il est des compétences d'un spécialiste du domaine d'adapter le capillaire pour satisfaire à cette condition.

Compte tenu de ses différents avantages, le procédé de l'invention trouve un grand nombre d'applications potentielles. En effet, il permet de déterminer les dimensions de nombreux analytes présents dans des mélanges, incluant aussi bien des petites molécules, que des molécules de taille plus importantes comme des peptides, des protéines, des chaînes d'ADN ou d'ARN (ou des fragments d'ADN ou d'ARN) ou des polymères (latex notamment, par exemple du type de ceux mis en oeuvre dans l'industrie du papier), voire des objets plus complexes, tels que des colloïdes, des nanoparticules, ou des microorganismes (virus, bactéries, par exemple).

Compte tenu de sa très bonne précision, le procédé de l'invention peut être utilisé non seulement en analyse chimique et physico-chimique de routine, mais également, compte tenu de sa bonne précision, dans des contrôles qualité, ainsi qu'en analyse biomédicale, par exemple pour la caractérisation de polypeptides synthétiques utilisés pour la délivrance de principes actifs (notamment des composés tels que l'insuline).

Différents aspects et avantages du procédé apparaîtront de façon encore plus explicite au vu des exemples illustratifs donnés ci-après.

**EXEMPLE 1 : Détermination des rayons hydrodynamiques de deux polymères présents au sein d'un mélange.**

Le procédé de l'invention a été mis en oeuvre sur un mélange test comprenant deux polymères P1 et P2 suivants :

- polymère P1 : copolymère statistique d'acrylamide (90% en mole) et de 2-acrylamido-2-méthyl-propane-sulfonate (10% en mole), ayant un taux de charge de 10% et une masse molaire moyenne de $2.10^5$ g/mole (indice de polymolécularité de l'ordre de 2) ;
- **polymère P2 :** polystyrène sulfonate (taux de charge 100%) de masse molaire moyenne égale à $1,45.10^5$ g/mole (indice de polymolécularité inférieur à 1,2).

Plus précisément, le mélange testé est une solution aqueuse des polymères, avec une concentration en polymère P1 de 5 g/l., une et une concentration en polymère P2 de 0,5 g/l.

Le capillaire utilisé pour la séparation des deux polymères par électrophorèse et la détermination ultérieure de leurs rayons hydrodynamiques respectifs est un capillaire en silice vierge de diamètre interne $d_c$ égal à 50 microns, et de longueur totale égale à 40 cm, et muni d'un détecteur UV (détection des composés absorbant à la longueur d'onde de 200 nm) situé en sortie du capillaire à 31,5 cm de l'entrée du capillaire.

La température de travail du procédé est de 25°C.

On a effectué plusieurs séries de séparation électrophorétique suivies par des dispersions de Taylor, en mettant en oeuvre dans chaque cas les étapes (a) à (c) ci-dessous, en faisant uniquement varier la valeur de la dépression appliquée dans l'étape (c) de dispersion de Taylor :

(a) séparation électrophorétique des polymères P1 et P2 du mélange (m)

On a préalablement rempli le capillaire par un électrolyte de séparation qui est un tampon borate aqueux à 80 mM de pH égal à 9,2. La pression qui a été appliquée pour effectuer ce remplissage du tube capillaire est de 1 bar ($10^5$ Pa). Le capillaire a été alimenté avec cet électrolyte tout au long de l'électrophorèse et des étapes ultérieures.

Le mélange (m) contenant les deux polymères P1 et P2 a alors été introduit à l'entrée du capillaire en appliquant une pression de 40 mbar (4000 Pa) pendant 3 secondes.

Suite à cette injection, on a effectué l'électrophorèse en appliquant une différence de potentiel de 25 kV entre l'entrée et la sortie du capillaire, pendant une durée de 60 secondes.

On a ainsi effectué la séparation des polymères P1 et P2 au sein du capillaire, le copolymère P1 migrant plus rapidement vers la sortie du capillaire que le polymère P2 dans les conditions de l'électrophorèse effectuée.

**(b) injection d'un marqueur**

Suite à l'électrophorèse, on a supprimé la différence de potentiel appliquée, et on a injecté à l'entré du capillaire une solution de formamide à 0,03% en volume dans l'eau, le formamide introduit jouant le rôle de marqueur dans la suite du procédé. L'injection du formamide a été effectuée en appliquant une pression de 40 mbar (4000 Pa) pendant 3 secondes.

**(c) diffusion de Taylor**

Immédiatement suite à l'introduction du marqueur de l'étape (b) précédente, on a appliqué une pression hydrodynamique Δ**P** à l'entrée du capillaire, de façon à induire une diffusion de Taylor des différentes fractions présentes dans le capillaire. On a maintenu la pression ainsi appliquée jusqu'à ce que le marqueur soit détecté en sortie du capillaire (dans l'ordre, le polymère P1 sort le premier, puis P2, puis le marqueur).

Les étapes (a) à (c) ont été effectuées pour les différentes valeurs de ΔP suivantes : 30 mbar, 35 mbar, 40 mbar, 45 mbar et 50 mbar (soit 3000Pa, 3500 Pa, 4000 Pa, 4500 Pa et 5000 Pa), la valeur de ΔP étant maintenue dans chaque cas constamment égale à la valeur de consigne à 0,1 mbar près.

On a mesuré dans chaque cas les temps de détection de chacune des espèces (durée mesurée entre le début de l'application de la surpression et le moment de la détection au niveau du détecteur) :

Par exemple, pour la dépression de 35 mbar, on a mesuré les temps de détection suivants :

Copolymère P1 : $t_d^{p1}$ = 2,418 minutes
Polymère P2 : $t_d^{p2}$ = 4,482 minutes
Marqueur : $t_d^m$ = 6,859 minutes

On a également mesuré la largeur à mi-hauteur w1/2 de chacun des pics chromatographiques des polymères P1 et P2 correspondants.

**(d) détermination du rayon hydrodynamique des polymères**

Dans chaque cas, partir du temps de détection du marqueur, on a établi la vitesse de déplacement (u) de ce marqueur (qui s'est déplacé de 31,5 cm au moment du temps de détection). Dans la mesure où cette vitesse est la même pour l'ensemble des analytes présents dans le capillaire au début de l'étape (a), et étant donné qu'on a mesuré les temps de détection de chacun des polymères P1 et P2, on en déduit la longueur ($l_s$) parcourue par chacun des polymères pendant la diffusion de Taylor (cette longueur étant égale à la vitesse de déplacement multipliée par le temps de détection pour chacun des polymères), ce qui permet dans chaque cas de déterminer la variance H du pic de chaque constituant, selon la relation de Taylor.

A partir de la pente de la droite représentant l'évolution de H en fonction de u obtenue à partir des valeurs précédemment calculées, on a accédé à la valeur du coefficient de diffusion moléculaire de chacun des polymères.

Les coefficients de diffusion D correspondants sont reportés dans le tableau ci-après, ainsi que les rayons hydrodynamiques Rh correspondants.

Le tableau fait également figurer à titre de références les résultats des mesures du coefficient de diffusion $D_{ref}$ obtenus sur chacun des polymères P1 et P2 pris isolément, ce qui valide le procédé, les résultats obtenus se révélant tout à fait en accord avec ces références.

| | D | $R_h$(*) | $D_{Ref}$ |
|---|---|---|---|
| **P1** | $1,20.10^{-11}$ m²/s | 18,2 nm | $1,37.10^{-11}$ m²/s (**) |
| **P2** | $2,15.10^{-11}$ m²/s | 10,1 nm | $2,30.10^{-11}$ m²/s (***) |

(*) Valeur calculée à partir de la relation de Stokes/Einstein en prenant une viscosité de 1 centipoise ($10^{-3}$ Pa.s).

(**) Valeur calculée par analyse de dispersion de Taylor sur le copolymère P1 seul

(***) Valeur calculée selon l'équation suivante :

$$D = ( k T / 6 \pi \eta ) \times ( 10 \pi \eta N_A / 3 [\eta] M )^{1/3}$$

où $N_A$ est le nombre d'Avogadro. La viscosité intrinsèque du PSS dans l'eau à une force ionique de 0.1 M étant $[\eta]$ =1.68 $10^{-4}$ $M^{0.68}$, avec $[\eta]$ en dL/g (Macromolecules, 1983, 17, 1698-1704).

**EXEMPLE 2 : Détermination des rayons hydrodynamiques d'un polymère et de chaînes d'ADN présentes au sein d'un mélange.**

Le procédé de l'invention a été mis en oeuvre sur un mélange test dans des conditions similaires à celles mise en oeuvre dans l'exemple 1. ce mélange test comprend :

- le polymère P1 de l'exemple 1, et
- des chaînes d'ADN, qui sont les oligonucléotides à base de 13 unités, répondant à la séquence (5'-TCCTTTGTTTGTG).

Le mélange testé dans l'exemple 2 est plus précisément une solution aqueuse comprenant 7,5 g/L de polymère P1 et 0,98 g/L de chaînes ADN.

Le capillaire et les conditions qui ont été utilisées sont les mêmes que dans l'exemple 1.

Les coefficients de diffusion D et les rayons hydrodynamiques $R_H$ déterminés pour le polymère P1 et les chaînes polymères sont reportés dans le tableau ci-dessous.

Le tableau fait également figurer à titre de références les résultats des mesures du coefficient de diffusion $D_{ref}$ obtenus sur chacun des polymères P1 et des chaînes d'ADN pris isolément.

| | D | $R_h$(*) | $D_{Ref}$ |
|---|---|---|---|
| **P1** | $1,37.10^{-11}$ m²/s | 16,0 nm | $1,37.10^{-11}$ m²/s (**) |
| **ADN** | $1,60.10^{-10}$ m²/s | 1,36 nm | $1,63.10^{-10}$ m²/s |

(*) Valeur calculée à partir de la relation de Stokes/Einstein en prenant une viscosité de 1 centipoise ($10^{-3}$ Pa.s).

(**) Valeur calculée par analyse de dispersion de Taylor sur le copolymère P1 seul

## Revendications

1.    Procédé de séparation et de détermination du rayon hydrodynamique des constituants d'un mélange M, qui comprend les étapes suivantes :

(A) en utilisant la technique de l'électrophorèse capillaire, on sépare les constituants du mélange M, en les laissant au sein du capillaire utilisé ;

(B) à l'une des extrémités du capillaire ainsi obtenu, contenant dans différentes zones les constituants séparés dans l'étape (A), on injecte un marqueur détectable au niveau d'un dispositif de détection placé du côté de l'autre extrémité du capillaire ;

(C) on induit une différence de pression hydrostatique positive entre l'extrémité du capillaire par laquelle on a introduit le marqueur de l'étape (B) et l'autre extrémité du capillaire, ce par quoi on induit un déplacement des différentes espèces présentes dans le capillaire, associé à un phénomène de dispersion de Taylor, et on laisse migrer devant le détecteur en sortie du capillaire les différents constituants séparés lors de l'étape (A), et enfin le marqueur introduit lors de l'étape (B) ; et

(D) par analyse de la dispersion de Taylor obtenue, on détermine le rayon hydrodynamique de chacun desdits constituants, à partir du temps de détection du marqueur et du profil d'élution de chacun des constituants.

**2.** Procédé selon la revendication 1, où, dans l'étape (D), tout ou partie des constituants du mélange M sont des espèces chargées électriquement.

**3.** Procédé selon la revendication 1 ou 2, dans lequel le mélange M comprend des constituants non chargés électriquement séparables par électrophorèse capillaire en mode micellaire

**4.** Procédé selon l'une quelconque des revendication 1 à 3, où les constituants du mélange M sont des molécules, des macromolécules, des associations de molécules ou de macromolécules, des particules, des colloïdes, des globules insolubles dans un milieu dispersant, des agrégats de particules, des agrégats de polymères et/ou des microorganismes.

**5.** Procédé selon l'une quelconque des revendication 1 à 4, où le capillaire utilisé a un diamètre interne compris entre 10 et 100 microns.

**6.** Procédé selon l'une quelconque des revendications 1 à 5, où le capillaire utilisé a une longueur comprise entre 20 cm et 1 m, par exemple entre 30 et 50 cm.

**7.** Procédé selon l'une quelconque des revendications 1 à 6, où le marqueur introduit dans l'étape (B) est choisi parmi le formamide, le diméthylformamide, l'oxyde de mésityle, l'acétone, les marqueurs de type imidazoles, l'acide benzoïque et les naphtalène sulfonates.

**8.** Procédé selon l'une quelconque des revendications 1 à 7, où la dépression appliquée au cours de l'étape (C) entre les extrémités du capillaire reste constante tout au long de cette étape.

**9.** Procédé selon l'une quelconque des revendications 1 à 8, où on répète plusieurs fois les étapes (A), (B) et (C) sur différents échantillons du mélange M, en variant dans chaque cas uniquement la différence de pression imposée dans l'étape (B), tous les autres paramètres restant inchangés, ce par quoi on accède pour les différentes pressions à différentes valeurs de variance des pics et de vitesse de déplacement dans le capillaire, ce qui permet de tracer pour chaque constituant une droite d'évolution de la variance du pic en fonction de la vitesse de déplacement, dont la pente donne accès au coefficient de diffusion D du constituant considéré, à partir duquel on calcule le rayon hydrodynamique dudit constituant.

**Patentansprüche**

**1.** Verfahren zur Separation und zur Ermittlung des hydraulischen Radius der Bestandteile einer Mischung M, welches die folgenden Schritte aufweist:

(A) unter Verwenden der Technik der kapillaren Elektrophorese werden die Bestandteile der Mischung M separiert, indem man sie in die verwendete Kapillare lässt,
(B) an das eine der Enden der dadurch erlangten Kapillare, die in unterschiedlichen Zonen die im Schritt (A) separierten Bestandteile enthält, wird ein Marker injiziert, der auf Höhe einer Detektionsvorrichtung detektierbar ist, die auf der Seite des anderen Endes der Kapillare angeordnet ist,
(C) ein positiver, hydrostatischer Differenzdruck wird induziert zwischen dem Ende der Kapillare, an welches der Marker von Schritt (B) einbracht worden ist, und dem anderen Ende der Kapillare, um dadurch eine Verlagerung der unterschiedlichen Arten, die in der Kapillare vorliegen, zu induzieren, verbunden mit einem Taylor-Dispersion-Phänomen, und man lässt die unterschiedlichen Bestandteile, die während des Schritts (A) separiert wurden, und schließlich den im Schritt (B) eingebrachten Marker beim Austritt aus der Kapillare vor den Detektor wandern, und
(B) mittels Analysierens der erlangten Taylor-Dispersion wird der hydraulische Durchmesser jedes der besagten Bestandteile ermittelt ausgehend von dem Ermittlungszeitpunkt des Markers und des Eluierungsprofils jedes der Bestandteile.

**2.** Verfahren gemäß Anspruch 1, wobei im Schritt (D) alle oder ein Teil der Bestandteile der Mischung M elektrisch geladene Arten sind.

**3.** Verfahren gemäß Anspruch 1 oder 2, wobei die Mischung M nicht elektrisch geladene Bestandteile aufweist, die mittels kapillarer Elektrophorese in micellarer Weise separierbar sind.

**4.** Verfahren gemäß irgendeinem der Ansprüche 1 bis 3, wobei die Bestandteile der Mischung M Moleküle, Makromoleküle, Verbindungen von Molekülen und Makromolekülen, Partikel, Kolloide, Blutkörperchen, die in einem dispergierenden Medium unlöslich sind, Aggregate von Partikeln, Aggregate von Polymeren und/oder Mikroorganismen sind.

**5.** Verfahren gemäß irgendeinem der Ansprüche 1 bis 4, wobei die verwendete Kapillare einen Innendurchmesser von zwischen 10 und 100 Mikrometern hat.

**6.** Verfahren gemäß irgendeinem der Ansprüche 1 bis 5, wobei die verwendete Kapillare eine Länge von zwischen 20cm und 1m hat, z.B. zwischen 30 und 50cm.

**7.** Verfahren gemäß irgendeinem der Ansprüche 1 bis 6, wobei der im Schritt (B) eingebrachte Marker ausgewählt ist aus Formamid, Dimethylformamid, Mesityloxyd, Aceton, Markern des Imidazol-Typs, Benzoesäure und Napthalensulfonaten.

**8.** Verfahren gemäß irgendeinem der Ansprüche 1 bis 7, wobei der im Rahmen des Schritts (C) zwischen den Enden der Kapillare applizierte Unterdruck während der Gesamtdauer dieses Schritts konstant bleibt.

**9.** Verfahren gemäß irgendeinem der Ansprüche 1 bis 8, wobei die Schritte (A), (B) und (C) mehrere Male wiederholt werden für unterschiedliche Proben der Mischung M, wobei bei jedem Mal einzig die Druckdifferenz variiert wird, die im Schritt (B) aufgebracht wird, wobei alle anderen Parameter unverändert gehalten werden, um dadurch für die unterschiedlichen Drücke zu unterschiedlichen Werten der Varianz der Spitzen und der Verlagerungsgeschwindigkeit in der Kapillare zu gelangen, was es erlaubt, für jeden Bestandteil eine Entwicklungsgerade der Spitzen-Varianz in Abhängigkeit von der Verlagerungsgeschwindigkeit zu zeichnen, deren Steigung Zugang zu dem Diffusionskoeffizienten D des betrachteten Bestandteils gibt, von welchem ausgehend man den hydraulischen Radius des besagten Bestandteils berechnet.

**Claims**

**1.** Method for separating and determining the hydrodynamic radius of the constituents of an admixture M, which comprises the following steps:

(A) the constituents of the admixture M are separated by using the technique of capillary electrophoresis, and by leaving them within the capillary ;
(B) at one of the ends of the capillary obtained in this manner, containing, in different zones, the constituents separated in step (A), a detectable marker is injected in the region of a detection device which is placed at the side of the other end of the capillary;
(C) a positive hydrostatic pressure difference is induced between the end of the capillary via which the marker of step (B) was introduced and the other end of the capillary, whereby a displacement of the different species present in the capillary is induced, associated with a phenomenon of Taylor dispersion, and the various constituents separated during step (A) and finally the marker introduced during step (B) are allowed to migrate in front of the detector at the outlet of the capillary; and
(D) by analysing the Taylor dispersion obtained, the hydrodynamic radius is determined for each of the constituents, based on the detection time of the marker and the elution profile of each of the constituents.

**2.** Method according to claim 1, wherein, in step (D), all or some of the constituents of the admixture M are species which are electrically charged.

**3.** Method according to claim 1 or 2, wherein the admixture M comprises constituents which are electrically non-charged and which can be separated by means of capillary electrophoresis in micellar mode.

**4.** Method according to any one of claims 1 to 3, wherein the constituents of the admixture M are molecules, macromolecules, associations of molecules or macromolecules, particles, colloids, globules which are insoluble in a dispersant medium, aggregates of particles, aggregates of polymers and/or microorganisms.

5. Method according to any one of claims 1 to 4, wherein the capillary used has an inner diameter of between 10 and 100 micrometres.

6. Method according to any one of claims 1 to 5, wherein the capillary used has a length of between 20 cm and 1 m, for example, between 30 and 50 cm.

7. Method according to any one of claims 1 to 6, wherein the marker introduced in step (B) is selected from formamide, dimethylformamide, mesityl oxide, acetone, markers of the imidazol type, benzoic acid and naphthalene sulphonates.

8. Method according to any one of claims 1 to 7, wherein the reduced pressure applied during step (C) between the ends of the capillary remains constant for the entire duration of this step.

9. Method according to any one of claims 1 to 8, wherein the steps (A), (B) and (C) are repeated several times on different samples of the admixture M, varying in each case only the pressure difference imposed in step (B), all other parameters remaining unchanged, whereby different values of peak variance and displacement speed in the capillary are established for the different pressures, which allows a straight development line of the peak variance to be drawn for each constituent in accordance with the displacement speed, the slope of which establishes the diffusion coefficient D of the constituent in question, based on which the hydrodynamic radius of the constituent is calculated.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03076052 A
- WO 9852013 A

- FR 0310299


**Littérature non-brevet citée dans la description**

- **B. J. BERNE ; R. PEROCA.** Dynamic light scattering. Wiley-Interscience, 1976
- **W. JORGENSON ; K.D. LUKACS.** *Anal. Chem.,* 1981, vol. 53, 1298
- **K. E. VAN HOLDE ; R. L. BALDWIN.** *J. Phys. Chem.,* 1958, vol. 62, 734
- **E. O. STEJSKAL ; J. E. TANNER.** *J. Chem. Phys.,* 1965, vol. 42, 288
- Chromatography in the Petroleum Industry. **J. BOS ; R. TIJSSEN.** J Chrom Library. Elsevier, 1995, vol. 56

- **M. G. KHALEDI.** High Performance Capillary Electrophoresis. *Chemical Analysis Series,* 1998, vol. 146
- Capillary electrophoresis : principles, practice and applications. *Journal of Chromatography Library,* 1996, vol. 52
- **G. TAYLOR.** *Proc. Roy. Soc.,* 1953, vol. 219, 186-203
- **R. ARIS.** *Proc. Roy. Soc. Lond.,* 1956, vol. 235, 67-77
- *Phys. Chem.,* 1974, vol. 78, 2297-2301
- *Science,* 1994, vol. 266, 773-776
- *Macromolecules,* 1983, vol. 17, 1698-1704